# EUROPEAN PATENT APPLICATION

(11) **EP 1 032 148 A2**
(43) Date of publication of application: **30.08.2000**
(21) Application number: 99308057.1
(22) Date of filing: 13.10.1999
(51) Int. Cl.: H04H 7/00

(54) **A system for electronic placement and broadcast of an advertisement**

(30) Priority: 15.02.1999 SG 9900051
(71) Applicant: Advent Television Ltd., Singapore 298135 (SG)
(72) Inventor: Chatfield, Robert Jeffries, 357853 Singapore (SG)
(74) Representative: Powell, Timothy John

(57) **Abstract**

A system for placing advertisements and broadcast thereof is disclosed, comprising:
a data server, accessible via a plurality of networked computers, for receiving data concerning an advertisement and arranged to validate said data and communicate validated data to at least one processor means;
each processor means being associated with a corresponding media broadcast system and arranged to allocate each advertisement represented by validated data at least one broadcast time and communicate said validated data to layout generation means at each broadcast time;
said layout generation means responsive to the validated data to produce an advertisement display and to combine the advertisement display with a media display for broadcast by the media broadcast system.

## Description

### FIELD OF THE INVENTION

This invention relates to a system for electronic placement and broadcast of an advertisement. The invention is particularly, although not exclusively, suited for broadcasting advertisements by television.

### BACKGROUND ART

Currently, advertisements can be placed in a number of different media types, including newspapers and television.

The cost of placing an advertisement in a newspaper is relatively low. However, newspaper classifieds tend to be visually unattractive, typically consisting of large volumes of text. Adding graphic material to a newspaper classified advertisement can significantly increase the cost of the advertisement.

Television advertisements have a relatively high cost for both production and broadcast. As such, television advertisements are generally not suited to smaller, individual advertisements.

Television advertisements have the advantage of reaching a group of people who may be watching a single television. Further, television advertisements tend to be more dynamic than printed text and are therefore more likely to catch the attention of a casual observer.

### DISCLOSURE OF THE INVENTION

Throughout the specification, unless the context requires otherwise, the word "comprise" or variations such as "comprises" or "comprising", will be understood to imply the inclusion of a stated integer or group of integers but not the exclusion of any other integer or group of integers.

In accordance with a first aspect of this invention, there is provided a system for placing advertisements and broadcast thereof, comprising:
a data server, accessible via a plurality of networked computers, for receiving data concerning an advertisement and arranged to validate said data and communicate validated data to at least one processor means;
each processor means being associated with a corresponding media broadcast system and arranged to allocate each advertisement represented by validated data at least one broadcast time and communicate said validated data to layout generation means at each broadcast time;
said layout generation means responsive to the validated data to produce an advertisement display and to combine the advertisement display with a media display for broadcast by the media broadcast system.

Preferably, the data server includes a clip art gallery from which advertisers can select clip art.

Preferably, said data includes:
a text description;
payment information;
selected clip art;
coverage data; and
advertising frequency data.

Preferably, said data server includes filter means arranged to remove predetermined words from said text description.

Preferably, said filter means performs a search of the text description for any word or phrase in a list of prohibited words and phrases.

In one arrangement, said filter means is arranged to reject said advertisement if the text description contains more than a predetermined number of prohibited words or phrases.

Preferably, said data server includes financial verification means arranged to confirm said payment information is valid.

Preferably, said financial verification means calculates the cost of said advertisement from at least said coverage data and said advertising frequency data.

Preferably, said financial verification means obtains payment for the calculated cost before verifying said data.

Preferably, said data server is arranged to communicate said validated data to at least one processor means whose media broadcast system operates in said coverage area.

Preferably, said data server includes a store of advertisements accessible via the plurality of networked computers.

Preferably, said data server is arranged to add an advertisement corresponding to validated data to said store.

Preferably, said media broadcast system comprises a television broadcast station.

Preferably, said television broadcast station comprises a digital television broadcast station.

Preferably, said media display comprises a television picture.

Preferably, said media display and the advertisement display occupy separate regions on the television.

Alternatively, the advertisement display is superimposed on the media display.

### BRIEF DESCRIPTION OF THE DRAWINGS

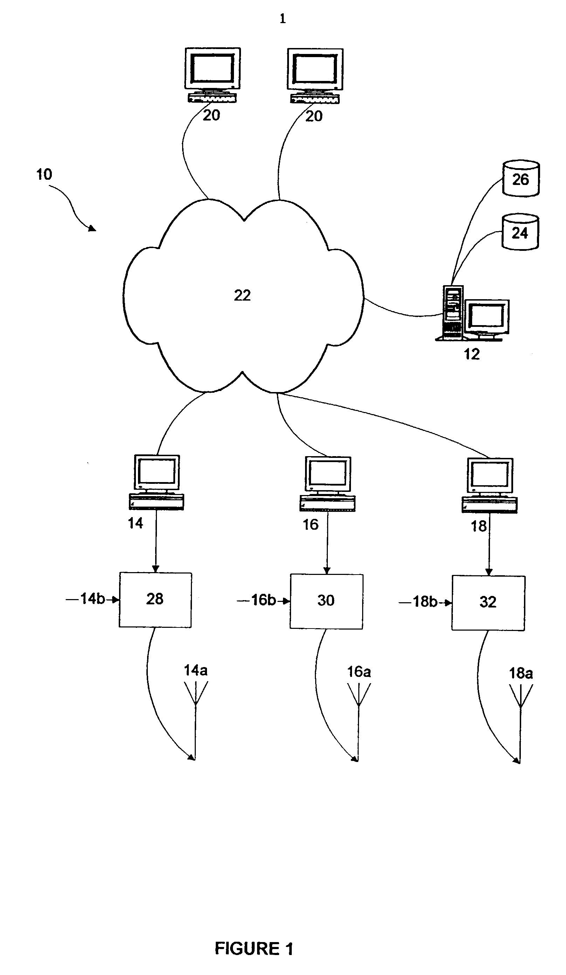

The invention will now be described with reference to one embodiment thereof and the accompanying drawing, which shows the system of the embodiment.

### BEST MODE(S) FOR CARRYING OUT THE INVENTION

The embodiment is directed towards a system 10 for placing advertisements and broadcast thereof. The system 10 comprises a data server in the form of a first computer 12, and three processor means in the form of second computers 14, 16 and 18. Each of the second computers 14, 16 and 18 are associated with a corresponding digital television broadcast system 14a, 16a and 18a.

The first computer 12 is accessible via plurality of networked computers 20 . The first computer 12 and the computers 20 are intemetworked by any suitable means, such as a MAN, WAN, or the Internet. The network is shown in the diagram as 22.

The first computer 12 includes an advertisement placement facility accessible from any of the computers 20. It is envisaged that the advertisement placement facility will be a web page on the Internet in some embodiments.

A user accessing the advertisement placement facility on the first computer 12 can enter data concerning their advertisement. By submitting their data, the user is requesting that the advertisement is broadcast. This data includes:
- a text description. This forms the basis of the advertisement.
- payment information in the form of a credit card number, expiry date and type.
- clip art selected by the user. The first computer 12 includes a first store 24 of clip art from which the user can choose.
- coverage data selected from a list. The list details the areas that the advertisement can be broadcast to, determined by the coverage area of the digital television broadcast systems 14a, 16a and 18a. The user selects one or more areas from the list according to his or her requirements.
- advertising frequency data, including dates. This data is entered by the user. It is preferred that the advertising frequency data other than the dates are chosen from a list. In this manner, predetermined costs can be ascribed to each item in the list. Examples include the advertisement being broadcast at least four times each day for $15 per area, or broadcast once per hour for $40 per area. It is envisaged that a variety of ways of presenting the information to the user can be adopted. It is also envisaged that the user may be able to specify time slots during which their advertisement will be broadcast.
- email address. This is not essential, however it allows the system 10 to provide the user with feedback concerning their advertisement.

The first computer 12 then validates the data as follows. Firstly, the text description is passed through a filter to remove any prohibited words or phrases. This is to ensure that undesirable material is not broadcast. The filter can take several forms, including a literal comparison of each word in the text description with a list of prohibited words and a phonetic comparison.

If the text description contains more than a predetermined number of prohibited words, the advertisement is rejected. If the user supplied an email address, the user is sent a message informing them of the rejection.

If the message is not rejected, the first computer 12 then calculates the cost of the advertisement from the submitted data. The cost can be based data such as the coverage area, advertisement frequency data, and whether any clip are is selected.

The first computer 12 then validates the payment information. Preferably, this is done by the first computer 12 effecting payment of the calculated cost from the credit card. If the payment is refused, the advertisement is rejected and the user is sent an appropriate message.

If the text description and the payment information are successfully validated, the first computer forms validated data comprising the filtered text description, clip art selected by the user, coverage data, advertising frequency data, and email address. The validated data is then communicated to the relevant second computer 14, 16 and/or 18 based on the coverage data. For convenience, the second computers 14, 16 and 18 are also connected to the network 22. In other embodiments, the second computers 14, 16 and 18 may be in communication with the first computer 12 by other means.

The first computer 12 also includes a second store 26 which contains advertisements that are successfully validated. The advertisements in the second store 26 are accessible from the computers 20 via the Internet 22. Preferably, a search facility is provided for users to access the second store 26.

Each of the second computers 14, 16 and 18 receives validated data from the first computer 12 for advertisements whose coverage data corresponds with the coverage area of the corresponding digital television broadcast systems 14a, 16a and 18a.

Each of the second computers 14, 16 and 18 processes the received validated data in the same manner. The following description will be made with reference to the second computer 14, however it is also applicable to the second computers 16 and 18.

When the second computer 14 receives validated data from the first computer 12, the validated data is processed as follows.

The second computer 14 analyses the advertisement frequency data to determine the number of times the advertisement will be broadcast, the dates of the broadcast, etc. The second computer 14 then reads the advertisement frequency data of all other validated data it has received concerning the dates and times the current validated data.

The second computer 14 then schedules the advertisements and allocates particular broadcast times to each advertisement. These broadcast times are stored along with the validated data for each advertisement on the second computer 14. If the second computer 14 determines that a particular time interval is full, it communicates with the first computer 12, which then prevents further users from selecting a full time interval.

When the broadcast time of an advertisement is reached, the second computer 14 communicates the validated data to a layout generation device 28. If an email address was specified by the user, the second computer 14 sends the user a message confirming when the advertisement was broadcast. The second computers 16 and 18 communicate with layout generation devices 30 and 32, respectively.

The layout generation device 28 receives validated data from the second computer 14 and a digital TV picture for transmission by the digital television broadcast station 14a, shown in the diagram at 14b. Similarly, digital TV pictures for transmission by the digital television broadcast stations 16a and 18a are shown in the diagram at 16b and 18b, respectively.

The layout generation device 28 generates an advertisement display from the validated data. The advertisement display is then combined with the digital TV picture 14b. The combined display is sent to the digital TV broadcast station 14a to be broadcast. Preferably, the advertisement display occupies a separate portion of the total display to the digital TV picture, for instance the lower ¼ of the total display.

The layout generation device 28 creates the advertisement display from the text description and the selected clip art in the validated data. It is envisaged that display options could be provided, whereby the user can select a fade-in and fade-out, foreground and background colours, fonts, scrolling and scrolling speed, etc which would form part of the validated data. The layout generation device 28 would then generate the advertisement display using the display options. Note that the advertisement display is not necessarily a static display, hence the layout generation device 28 generates an advertisement display for each frame of digital TV picture.

It is envisaged that in some embodiments, the layout generation device 28 may be integrated with the second computer 14. This is particularly advantageous when dealing with digital TV pictures.

It should be appreciated that the invention is not limited to the particular embodiment described above.

## Claims

1. A system for placing advertisements and broadcast thereof, comprising:
a data server, accessible via a plurality of networked computers, for receiving data concerning an advertisement and arranged to validate said data and communicate validated data to at least one processor means;
each processor means being associated with a corresponding media broadcast system and arranged to allocate each advertisement represented by validated data at least one broadcast time and communicate said validated data to layout generation means at each broadcast time;
said layout generation means responsive to the validated data to produce an advertisement display and to combine the advertisement display with a media display for broadcast by the media broadcast system.

2. The system of claim 1, wherein the data server includes a clip art gallery from which advertisers can select clip art.

3. The system of claim 1 or 2, wherein said data includes:
a text description;
payment information;
selected clip art;
coverage data; and
advertising frequency data.

4. The system of any one of the preceding claims, wherein said data server includes filter means arranged to remove predetermined words from said text description.

5. The system of claim 4, wherein said filter means performs a search of the text description for any word or phrase in a list of prohibited words and phrases.

6. The system of claim 5, wherein said filter means is arranged to reject said advertisement if the text description contains more than a predetermined number of prohibited words or phrases.

7. The system of any one of the preceding claims, wherein said data server includes financial verification means arranged to confirm said payment information is valid.

8. The system of claim 7, wherein said financial verification means calculates the cost of said advertisement from at least said coverage data and said advertising frequency data.

9. The system of claim 8, wherein said financial verification means obtains payment for the calculated cost before verifying said data.

10. The system of any one of the preceding claims, wherein said data server is arranged to communicate said validated data to at least one processor means whose media broadcast system operates in said coverage area.

11. The system of any one of the preceding claims, wherein said data server includes a store of advertisements accessible via the plurality of networked computers.

12. The system of claim 11, wherein said data server is arranged to add an advertisement corresponding to validated data to said store.

13. The system of any one of the preceding claims, wherein said media broadcast system comprises a television broadcast station.

14. The system of claim 13, wherein said television broadcast station comprises a digital television broadcast station.

15. The system of Claim 13 or 14, wherein said media display comprises a television picture.

16. The system of Claim 15, wherein said media display and the advertisement display occupy separate regions on the television.

17. The system of Claim 15, wherein the advertisement display is superimposed on the media display.

18. A method for placing advertisements and broadcasts thereof, the method comprising:
receiving, at a data server accessible via a plurality of networked computers, data concerning an advertisement;
validating said data;
communicating validated data to at least one processor means, each processor means being associated with a corresponding media broadcast system;
allocating to each advertisement, represented by validated data, at least one broadcast time;
communicating said validated data to layout generation means at each broadcast time;
said layout generation means producing an advertisement display responsive to the validated data and combining the advertisement display with a media display for broadcast by the media broadcast system.

19. A computer program product directly loadable into the internal memory of a digital computer, comprising software code portions for performing the method of Claim 18 when said product is run on a computer.

20. Electronic distribution of a computer program according to Claim 19.
